# EUROPEAN PATENT SPECIFICATION

(11) **EP 2 750 516 B1**
(45) Date of publication and mention of the grant of the patent: **27.05.2015**
(21) Application number: 12748235.4
(22) Date of filing: 21.08.2012
(51) Int. Cl.: A23G 9/00, A23G 9/04, A23G 9/28, A23G 9/30

(54) **METHOD AND DEVICE FOR OPERATING AND WASHING A DESSERT MAKER**
VERFAHREN UND VORRICHTUNG ZUM BETREIBEN UND WASCHEN EINER SÜSSSPEISENMASCHINE
PROCÉDÉ ET DISPOSITIF DE FONCTIONNEMENT ET DE LAVAGE D'UN PRÉPARATEUR DE DESSERTS

(30) Priority: 01.09.2011 NO 20111194; 01.09.2011 US 201113223901
(43) Date of publication of application: 09.07.2014
(73) Proprietor: Marienlyst Eiendom AS, 3003 Drammen (NO)
(72) Inventor: HANSEN SR., Asbjørn, N-3016 Drammen (NO)
(74) Representative: Onsagers AS
(86) International application number: PCT/EP2012/066241
(87) International publication number: WO 2013/030038

(56) References cited:
- EP-A2- 0 287 194
- EP-A2- 1 254 603
- WO-A1-91/06221

## Description

### FIELD OF THE INVENTION

The present invention describes a method and device for operating and controlling an apparatus for mixing frozen desserts. More specifically the invention describes details of a method for operating and washing a dessert maker.

### BACKGROUND OF THE INVENTION

A mixing apparatus for mixing ice cream and other frozen desserts with one or more additives typically comprises a funnel for holding the frozen dessert and additives, an auger with a spindle for creating a mixing action, an auger driver for rotating the auger spindle, and a linear actuator for relative movement of the funnel and auger into a position in which the auger is telescoped into the funnel, in which position a rotation of the auger will mix the different ingredients of the frozen dessert. The following disclosure relate to a mixing apparatus for making ice cream, and especially to an improved mixing apparatus for providing easy maintenance and cleaning.

Ice cream is normally in hard form, while flavour additives may be fruits or nuts. The result of such a mixing is a semi-liquid ice cream in which the flavour additives are more or less distributed before being dispensed from the mixing apparatus.

Such apparatuses are known from a number of patents, e.g. US-6.341.887 and US-6.318.889 describing apparatuses comprising an auger or agitator with a helical thread or cutter extending into a funnel or container for holding the ice cream and additives. The auger and funnel are relatively rotatable, and after some rotation the ice cream and additives have obtained a desired semi-liquid condition.

An issue with apparatuses known from said prior art is maintenance and cleaning. Due to the construction of a mixing chamber made in one closed piece, maintenance and cleaning of the chamber is cumbersome and can not be performed efficiently.

There is thus a need for an improved method for ensuring a continuous and hygienic production of frozen desserts.

The applicant has developed a mixing apparatus facilitating better maintenance and cleaning of a mixing apparatus. To enhance the usability of the dessert maker and for hygienic reasons, the dessert maker has a mixing chamber made up of two main parts comprising a funnel and a top chamber forming a closed mixing chamber when brought together. A spindle is accommodated through the top chamber. Water spray nozzles are further provided in the top chamber. The mixing apparatus also comprises a water heater as well as a detergent container.

The present invention presents a method for ensuring continuous and hygienic operations of such dessert maker.

### SUMMARY OF THE INVENTION

The invention is described by a method for ensuring continuous and hygienic operation of an apparatus for mixing frozen desserts in a mixing chamber formed by a top chamber and a funnel brought together, and where a spindle with driving means is accommodated through said top chamber, said method is comprises the following steps:
- checking whether a predetermined time has passed since a last rinsing or washing operation has been performed;
   - if a predetermined time has passed, then disabling mixing operation and notify that a washing procedure is required;
   - if a predetermined time has not passed, then enable mixing operation;
- initiating a rinsing process when selected;
- initiating a washing process when selected, and
- initiating mixing operation of frozen desserts when enabled and selected.

The invention further comprises a device for performing said method.

Further features of the invention are defined in the dependent claims.

It should be understood that the detailed description and specific examples, while indicating preferred embodiments of the invention are given by way of illustration only, since various changes and modifications within the spirit and scope of the invention will become apparent to those skilled in the art.

### BRIEF DESCRIPTION OF THE DRAWINGS

The invention will now be explained by a description of a preferred embodiment with reference to the accompanying drawings which are given by way of illustration only. The scope of the invention is defined in the main claims.
Fig. 1 shows a complete and ready to use set-up of the mixing apparatus, and
Fig. 2 is a flowchart of the method operation of the mixing apparatus.

### DETAILED DESCRIPTION

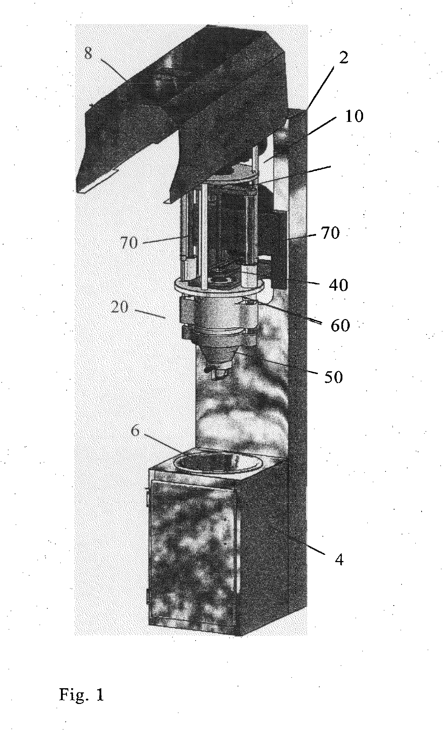

Figure 1 shows a complete mounted and ready to use set-up of the mixing apparatus 10 for frozen desserts. The figure shows the apparatus 10 for mixing frozen desserts mounted on a rack 2. When in use, the mixing apparatus 10 is protected by a lid 8 (shown in a lifted position). The figure further shows a cabinet 4 with a sink 6 located below the mixing apparatus 10. The sink is used when performing a cleaning operation of the mixing apparatus 10.

The mixing apparatus 10 comprises a mixing chamber 20 and a spindle 30 with driving means 40 for rotating the spindle 30. The spindle 30 has the shape of a conical screw. The mixing chamber 20 is where the frozen dessert, e.g. ice cream and flavour additives, is held and mixed.

The mixing chamber 20 is made up of two main parts comprising a funnel 50 and a top chamber 60 forming a closed mixing chamber 20 when brought together. The spindle 30 is accommodated through the top chamber 60.

Said funnel 50 comprises a valve assembly with a design that is advantageous with regards to maintaining high hygiene and easy cleaning. It is easy to remove and clean the parts in contact with the frozen dessert.

The mixing apparatus 10 has a self contained washing system comprising water heater, containers for detergent and disinfectant, dosing units, and a device for controlling rinsing and washing procedure, i.e. controlling temperature, supply of detergent and disinfectant.

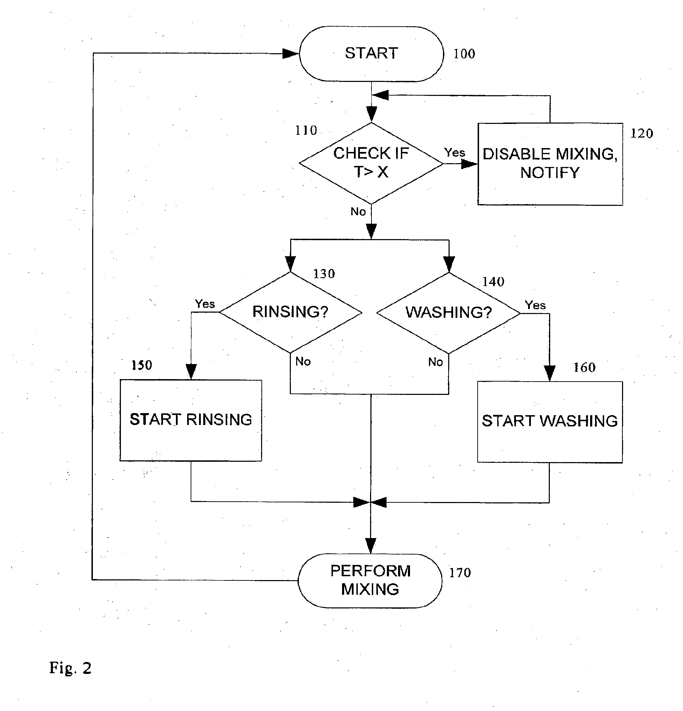

Figure 2 is a flowchart of the method for ensuring continuous and hygienic operation of a mixing apparatus 10 for mixing frozen desserts in a mixing chamber 20 formed by a top chamber 60 and a funnel 50 brought together, and where a spindle 30 with driving means is accommodated through said top chamber 60. The method comprises several steps.

The method is implemented in a device with control software controlling the operation of the mixing apparatus 10. When an operator, through input means, indicates that the mixing apparatus 10 is to be used, the status of the apparatus is first checked. Depending on the status, mixing operation will be enabled or disabled.

When it is indicated that the mixing apparatus is to be used the controlling of the operation starts 100. It is first checked 110 if a predetermined time has passed since last rinsing or washing operation was performed. This is to ensure that the different parts in contact with the dessert to be mixed are clean.

If a predetermined time has passed, mixing operation is disabled 120 and the mixing apparatus will notify that a rinsing or washing operation is required. The notification can be visual through information on a text display or a blinking lamp. It may also be a notification in the form of a sound, or a combination of these. The mixing operation will stay disabled until a rinsing or washing operation is performed.

A rinsing or washing operation can be performed by a manual or an automatic operation.

When a manual rinsing or washing operation is chosen, the mixing apparatus will stay in standby with mixing operation disabled until an operator initiates a rinsing or washing procedure.

When an automatic rinsing or washing operation is chosen, the mixing apparatus will automatically initiate and perform a rinsing or washing operation. Which operation to perform can be programmed and depend on the time passed since last operation, i.e. mixing, rinsing or washing. The programming can be performed locally or remotely via network means.

A rinsing procedure is not as thorough as a washing procedure. A rinsing procedure is performed by several steps. First, the funnel 50 and the stationary top chamber 60 are brought together thus forming a closed mixing chamber 20. Next, the spindle 30 is rotated, and it is checked whether the valve at the bottom of the funnel 50 is open. If said valve is open then water is applied through water spray nozzles that are directed at the spindle 30 mounted in the top chamber 60. In the last step, the funnel 50 is lowered after the rinsing has finished.

A washing procedure is performed by several steps. First, the funnel 50 and the stationary top chamber 60 are brought together forming a closed mixing chamber 20. Next, the spindle 30 is rotated, and it is checked whether the valve at the bottom of the funnel 50 is open. If said valve is open then detergent at hot water is applied through water spray nozzles that are directed at the spindle 30 and mounted in the top chamber 60. In the last step, the funnel 50 is lowered after the washing process has finished.

The operator of the mixing apparatus 10 can at any time perform a manual rinsing or cleaning operation when found necessary, e.g. between mixing of frozen desserts with different taste and/or color.

Whether a rinsing or washing operation is to be performed the valve at the bottom of the funnel 50 has to be open in order to perform either process.

The design of the valve is advantageous with regards to maintaining high hygiene and easy cleaning. By removing a cotter pin, a flat plate element closing the opening of the outlet of the funnel 50 can be easily removed from the funnel 50 to be cleaned. The valve is then open. The flat plate element can be placed in the sink 6 located below outlet of the valve of the funnel 50 of the mixing apparatus 10. The water from the nozzles located in the top chamber 60 will hit the spindle 30 and top chamber 60, pass through the mixing chamber 20, and will flow out into the sink 6 through the valve opening at the bottom of the funnel 50, thus flushing the valve part in the sink.

The inventive method and device facilitates easy cleaning of all parts in contact with the frozen dessert, i.e. the valve parts, the funnel 50, the top chamber 60 and the spindle 30, in one controlled operation.

Variations of the,invention as described above is possible and all such modifications as would be obvious for a skilled person are intended to be included within the scope of the invention as defined in the following claims.

## Claims

1. Method for ensuring continuous and hygienic operation of a mixing apparatus (10) for mixing frozen desserts in a mixing chamber (20) formed by a top chamber (60) and a funnel (50) brought together, and where a spindle (30) with driving means is accommodated through said top chamber (60), said method is
**characterized in** the following steps:
- checking (110) whether a predetermined time has passed since a last rinsing or washing operation has been performed;
- if a predetermined time has passed, then disabling mixing operation (120) and notify that a rinsing and/or washing operation is required;
- if a predetermined time has not passed, then enable mixing operation;
- initiating a rinsing process (150) when selected (130);
- initiating a washing process (160) when selected (140), and
- performing a mixing operation of frozen desserts when enabled (170) and selected.

2. Method according to claim 1, where rinsing (150) and/or washing process (160) is performed by manual or automatic operation.

3. Method according to claim 1, where the rinsing process (150) is performed by the following steps:
- bringing the funnel (50) and the stationary top chamber (60) together thus forming a closed mixing chamber (20);
- rotating the spindle (30);
- checking whether a valve at the bottom of the funnel (50) is open;
- if said valve is open then apply water through water spray nozzles that are directed at the spindle (30), and where said nozzles are mounted in the top chamber (60);
- lowering the funnel (50) after the rinsing process (150) has finished.

4. Method according to claim 1, where the washing process (160) is performed by the following steps:
- bringing the funnel (50) and the stationary top chamber (60) together thus forming a closed mixing chamber (20);
- rotating the spindle (30);
- checking whether valve at the bottom of the funnel (50) is open;
- if said valve is open then apply detergent and hot water through water spray nozzles that are directed at the spindle (30), and where said nozzles are mounted in the top chamber (60);
- lowering the funnel (50) after the washing process (160) has finished.

5. Device for operating and controlling an apparatus (10) for mixing frozen desserts in a closed mixing chamber (20) formed by a top chamber (60) and funnel (50) with a valve at its bottom, and where a spindle (30) with driving means is accommodated in said top chamber (60), said device is **characterized in** comprising means for:
- checking (110) whether a predetermined time has passed since last rinsing or washing operation has been performed;
- initiating a rinsing process (150) when selected (130) through input means;
- initiating a washing process (160) when selected (140) through input means, and
- performing a mixing operation of frozen desserts when enabled (170) and selected through input means.

6. Device according to claim 5, is **characterized in that** the device have means for being remotely operated and controlled.

## Patentansprüche

1. Verfahren zum Sicherstellen eines kontinuierlichen und hygienischen Betätigens einer Mischungsvorrichtung (10) zum Mischen von gefrorenen Nachspeisen in einer Mischungskammer (20), die durch eine Zusammenführung einer oberen Kammer (60) und eines Trichters (50) ausgebildet ist, wobei eine Spindel (30) mit einem Antriebsmittel durch die obere Kammer (60) aufgenommen ist und das Verfahren
durch die folgenden Schritte gekennzeichnet ist:
- Überprüfen (110), ob eine vorbestimmte Zeit verstrichen ist, seitdem eine letzte Spül- oder Waschoperation durchgeführt wurde;
- falls eine vorbestimmte Zeit verstrichen ist, wird eine Mischungsoperation (120) unterbunden und benachrichtigt, dass eine Spül- und/oder Waschoperation notwendig ist;
- falls eine vorbestimmte Zeit nicht verstrichen ist, wird eine Mischungsoperation freigegeben;
- Beginnen eines Spülprozesses (150), wenn dieser ausgewählt (130) wurde;
- Beginnen eines Waschprozesses (160), wenn dieser ausgewählt (140) wurde, und
- Durchführen einer Mischungsoperation von gefrorenen Nachspeisen, wenn diese freigegeben (170) und ausgewählt wurde.

2. Verfahren nach Anspruch 1, wobei der Spül- (150) und/oder Waschprozess (160) durch manuelles oder automatisches Betätigen durchgeführt wird.

3. Verfahren nach Anspruch 1, wobei der Spülprozess (150) durch die folgenden Schritte durchgeführt wird:
- Zusammenbringen des Trichters (50) und der stationären oberen Kammer (60), wodurch eine geschlossene Mischungskammer (20) ausgebildet wird;
- Rotieren der Spindel (30);
- Überprüfen, ob ein Ventil an dem Boden des Trichters (50) geöffnet ist;
- falls das Ventil geöffnet ist, Aufbringen von Wasser durch Wassersprühdüsen, die auf die Spindel (30) gerichtet sind, wobei die Düsen in der oberen Kammer (60) montiert sind;
- Absenken des Trichters (50) nachdem der Spülprozess (150) beendet ist.

4. Verfahren nach Anspruch 1, wobei der Waschprozess (160) durch die folgenden Schritte durchgeführt wird:
- Zusammenbringen des Trichters (50) und der stationären oberen Kammer (60), wodurch eine geschlossene Mischungskammer (20) ausgebildet wird;
- Rotieren der Spindel (30);
- Überprüfen, ob ein Ventil an dem Boden des Trichters (50) geöffnet ist;
- falls das Ventil geöffnet ist, Aufbringen von Reinigungsmittel und heißem Wasser durch Wassersprühdüsen, die auf die Spindel (30) gerichtet sind, wobei die Düsen in der oberen Kammer (60) montiert sind;
- Absenken des Trichters (50) nachdem der Waschprozess (160) beendet ist.

5. Einrichtung zum Betätigen und Steuern einer Vorrichtung (10) zum Mischen gefrorener Nachspeisen in einer geschlossenen Mischungskammer (20), die durch eine obere Kammer (60) und einen Trichter (50) mit einem Ventil an seinem Boden ausgebildet ist, wobei eine Spindel (30) mit einem Antriebsmittel in der oberen Kammer (60) aufgenommen ist und die Einrichtung **dadurch gekennzeichnet ist, dass** sie Mittel umfasst, um:
- zu überprüfen (110), ob eine vorbestimmte Zeit verstrichen ist, seit eine letzte Spül- oder Waschoperation durchgeführt wurde;
- einen Spülprozess (150) zu beginnen, wenn dieser durch ein Eingabemittel ausgewählt (130) wurde;
- einen Waschprozess (160) zu beginnen, wenn dieser durch ein Eingabemittel ausgewählt (140) wurde, und
- eine Mischungsoperation von gefrorenen Nachspeisen durchzuführen, wenn diese freigegeben (170) und durch ein Eingabemittel ausgewählt wurde.

6. Einrichtung nach Anspruch 5, **dadurch gekennzeichnet, dass** die Einrichtung ein Mittel hat, um aus der Ferne betätigt und gesteuert zu werden.

## Revendications

1. Procédé destiné à garantir un fonctionnement continu et hygiénique d'un appareil de mélange (10) destiné à mélanger des desserts glacés dans une chambre de mélange (20) formée par une chambre haute (60) et un entonnoir (50) réunis, et où une broche (30) dotée d'un moyen d'entraînement est reçue dans ladite chambre haute (60), ledit procédé étant
**caractérisé par** les étapes suivantes consistant à :
- vérifier (110) si une durée prédéfinie s'est écoulée depuis la réalisation d'une dernière opération de rinçage ou de lavage ;
- si une durée prédéfinie s'est écoulée, désactiver alors l'opération de mélange (120) et notifier qu'une opération de rinçage et/ou de lavage est nécessaire ;
- si une durée prédéfinie ne s'est pas écoulée, activer alors l'opération de mélange ;
- entreprendre un procédé de rinçage (150) quand il est sélectionné (130) ;
- entreprendre un procédé de lavage (160) quand il est sélectionné (140), et
- réaliser une opération de mélange de desserts glacés quand elle est activée (170) et sélectionnée.

2. Procédé selon la revendication 1, où le procédé de rinçage (150) et/ou de lavage (160) est réalisé par une opération manuelle ou automatique.

3. Procédé selon la revendication 1, où le procédé de rinçage (150) est réalisé par les étapes suivantes consistant à :
- réunir l'entonnoir (50) et la chambre haute fixe (60), formant ainsi une chambre de mélange fermée (20) ;
- faire tourner la broche (30) ;
- vérifier si un clapet situé dans le fond de l'entonnoir (50) est ouvert ;
- si ledit clapet est ouvert, appliquer alors de l'eau par l'intermédiaire de buses de pulvérisation d'eau qui sont orientées au niveau de la broche (30), lesdites buses étant montées dans la chambre haute (60) ;
- abaisser l'entonnoir (50) à la fin du procédé de rinçage (150).

4. Procédé selon la revendication 1, où le procédé de lavage (160) est réalisé par les étapes suivantes consistant à :
- réunir l'entonnoir (50) et la chambre haute fixe (60), formant ainsi une chambre de mélange fermée (20) ;
- faire tourner la broche (30) ;
- vérifier si un clapet situé dans le fond de l'entonnoir (50) est ouvert ;
- si ledit clapet est ouvert, appliquer alors un détergent et de l'eau chaude par l'intermédiaire de buses de pulvérisation d'eau qui sont orientées au niveau de la broche (30), lesdites buses étant montées dans la chambre haute (60) ;
- abaisser l'entonnoir (50) à la fin du procédé de lavage (160).

5. Dispositif destiné à faire fonctionner et à commander un appareil (10) destiné à mélanger des desserts glacés dans une chambre de mélange fermée (20) formée par une chambre haute (60) et un entonnoir (50) dans le fond duquel se trouve un clapet, et où une broche (30) dotée d'un moyen d'entraînement est reçue dans ladite chambre haute (60), ledit dispositif étant
**caractérisé en ce qu'**il comprend des moyens destinés à :
- vérifier (110) si une durée prédéfinie s'est écoulée depuis la réalisation d'une dernière opération de rinçage ou de lavage ;
- entreprendre un procédé de rinçage (150) quand il est sélectionné (130) par le biais d'un moyen d'entrée ;
- entreprendre un procédé de lavage (160) quand il est sélectionné (140) par le biais d'un moyen d'entrée, et
- réaliser une opération de mélange de desserts glacés quand elle est activée (170) et sélectionnée par le biais d'un moyen d'entrée.

6. Dispositif selon la revendication 5, **caractérisé en ce que** le dispositif possède des moyens destinés à être actionnés et commandés à distance.
